# EUROPEAN PATENT SPECIFICATION

(11) **EP 1 713 842 B1**
(45) Date of publication and mention of the grant of the patent: **24.11.2010**
(21) Application number: 05716676.1
(22) Date of filing: 14.02.2005
(51) Int. Cl.: C08F 210/02, C08F 2/14

(54) **PROCESS FOR IMPROVING THE CO-POLYMERIZATION OF ETHYLENE AND AN OLEFIN CO-MONOMER IN A POLYMERIZATION LOOP REACTOR.**
VERFAHREN ZUR VERBESSERUNG DER COPOLYMERISATION VON ETHYLEN UND EINEM OLEFIN-COMONOMER IN EINEM SCHLAUFENPOLYMERISATIONSREAKTOR
PROCESSUS D'AMELIORATION DE LA COPOLYMERIZATION DE L'ETHYLENE ET D'UN COMONOMERE D'OLEFINE DANS UN REACTEUR EN BOUCLE DE POLYMERISATION

(30) Priority: 13.02.2004 EP 04100568
(43) Date of publication of application: 25.10.2006
(73) Proprietor: TOTAL PETROCHEMICALS RESEARCH FELUY, 7181 Seneffe (Feluy) (BE)
(72) Inventor: DAMME, Eric, B-7181 Arquennes (BE)
(74) Representative: Leyder, Francis
(86) International application number: PCT/EP2005/050624
(87) International publication number: WO 2005/077994

(56) References cited:
- EP-A- 0 580 930
- EP-A- 0 891 990
- EP-A- 1 020 481
- WO-A-03/091294

## Description

### Field of the invention

The present invention relates to the field of olefin polymerization. In particular, the present invention relates to a process for improving the polymerization of a monomer and an olefin co-monomer in a polymerization loop reactor. In another aspect, the present invention relates to a polymerization reactor suitable for the polymerization process of a monomer and an olefin co-monomer.

### Background

Polyethylene (PE) is synthesized via polymerizing ethylene (CH₂=CH₂) monomers. Because PE is cheap, safe, stable to most environments and easy to be processed polyethylene polymers are useful in many applications. According to the properties polyethylene can be classified into several types, such as but not limited to LDPE (Low Density Polyethylene), LLDPE (Linear Low Density Polyethylene), and HDPE (High Density Polyethylene). Each type of polyethylene has different properties and characteristics.

Polyethylene polymerizations are frequently carried out using monomer, diluent and catalyst and optionally co-monomers and hydrogen in a loop reactor. The polymerization is usually performed under slurry conditions, wherein the product usually consists of solid particles and is in suspension in a diluent. The slurry contents of the reactor are circulated continuously with a pump to maintain efficient suspension of the polymer solid particles in the liquid diluent. The product is discharged by means of settling legs, which operate on a batch principle to recover the product. Settling in the legs is used to increase the solids concentration of the slurry finally recovered as product slurry. The product is further discharged to a flash tank, through flash lines, where most of the diluent and unreacted monomers are flashed off and recycled. The polymer particles are dried, additives can be added and finally the polymer is extruded and pelletized.

Ethylene co-polymerization is the process wherein ethylene is polymerized with an olefin co-monomer, such as e.g. propylene, butene, hexene, etc.. A major problem in such copolymerisation process is that the control of reaction parameters is very difficult. In particular, the ratio of co-monomer to monomer (ethylene) differs at different points in the reactor.

As a result of the variation in the co-monomerlethylene ratio throughout the reactor, reaction conditions will vary along the path of the polymerization reactor. As the monomer (ethylene) is depleted faster than the co-monomer in the reactor, fluctuations in reaction temperatures and fluctuations in monomer concentration along the reactor occur. In addition, due to varying reaction conditions in the reactor, the polymerization reaction is sub-optimal and polymer particles will be obtained during the polymerization process, which have varying properties and have a non-homogenous composition. In certain cases, due to the variation in the co-monomer/ethylene ratio throughout the reactor, polyethylene is produced having a too low density, which could induce "swelling" of the polymer particles. Swelling refers to the process whereby formed polymer particles are dissolved in diluent, giving rise to polymer slurry which is more viscous, which has undesired properties, and which may block the polymerization reactor. When the hexene/ethylene ratio is not adequately controlled in the first reactor of a double loop system, polymer particles having undesired and non-homogenous properties will be transferred from the first reactor to the second reactor. In addition, due to an inadequate control of the hexene/ethylene ratio in the first reactor, also the transfer of hexene together with polymer slurry from the first reactor to the second reactor, wherein it is used for further co-polymerization is not-inefficiently controlled. As a result thereof, the polymerization reaction in the second reactor may be sub-optimal and co-polymers having non-homogenous and undesired properties are prepared in the second reactor.

In view hereof, it is a need in the art to provide a process for improving the co-polymerization reaction of ethylene with an olefin co-monomer, such that the co-polymerization process is optimized and that more homogenous polymer end products are obtained.

It is therefore an object of the present invention to provide a process for improving the co-polymerization of ethylene and an olefin co-monomer. It is in particular an object of the invention to provide a process for controlling the co-monomer/ethylene ratio in a polymerization reactor. The present invention aims to provide a process for obtaining a copolymer end product having improved compositional homogeneity and improved quality.

### Summary

The present invention relates in a first aspect in a process for improving the co-polymerization of ethylene monomer and an olefin co-monomer in a polymerization loop reactor. The process comprises the steps of:
- feeding monomer, an olefin co-monomer, diluents and optionally hydrogen into the loop reactor,
- feeding at least one polymerization catalyst into the reactor,
- co-polymerizing said monomer and said co-monomer to produce a polymer slurry comprising essentially liquid diluent and solid olefin co-polymer particles,
- allowing said polymer slurry to settle into two or more settling legs connected to the reactor, and
- sequentially discharging the settled polymer slurry from said two or more settling legs out of the reactor,
   and is in particular **characterized in that** said process further comprises the step of controlling the co-monomer/monomer ratio along the path of the reactor by multiple, spatially separated, feeding of monomer along the path of the loop reactor and wherein the process is applied to the first loop of a double loop reactor.

The terms "path" and "flow path" of the reactor are used herein as synonyms and are defined as the internal route followed by the reactant stream and the formed polymer slurry in the reactor.

According to the present invention the co-monomer/ethylene ratio can be adequately controlled in the polymerization reactor. Therefore, the invention provides a process comprising controlling the co-monomer/monomer ratio by multiple, spatially separated, feeding of monomer along the path of the loop reactor. Additional monomer (ethylene) is fed into the reactor at multiple entries along the path of the reactor. The multiplied entries for feeding additional monomer are in particular positioned spatially separated from each other on the reactor.

In another preferred embodiment, the co-monomer/ethylene ratio can be adequately controlled in the polymerization reactor by multiple, spatially separated, feeding of monomer in conjunction with a diluent.

In yet another particularly preferred embodiment, the present process further comprises separately controlling the flow rate of each, spatially separated, monomer feed along the path of the loop reactor. Therefore, each additional ethylene feeding line is provided with a separate flow controlling means for controlling the flow rate of ethylene injection in the reactor.

The present invention has the major advantages of providing optimal control of the co-monomer/ethylene ratio in a polymerization reactor such that ethylene co-polymers can be produced having homogenous properties throughout the flow path of the reactor. Furthermore, the present process enables to optimize the polymerization reaction in the reactor. In particular, optimal and adequate control of co-monomer/ethylene ratio in the polymerization reactor permits to optimize and reduce fluctuations in reaction temperatures and fluctuations in monomer concentration in the reactor. A stable composition along the reactor, and a constant production rate can be obtained and thus less temperature oscillations are observed. Fluctuating temperature conditions throughout the reactor are absolutely detrimental with respect to homogeneity of composition of the prepared co-polymers. Adequate control of the co-monomer/ethylene ratio according to the present invention enables to minimize fluctuations in reaction temperatures and as a consequence to improve homogeneity of composition of the prepared polymers.

The present invention permits to prepare co-polymers having homogenous densities throughout the reactor. Furthermore, since according to the present invention co-polymers may be obtained that have desired and relatively constant densities, the risk of obtaining copolymer particles having too low densities, which might induce "swelling" is considerably reduced. Swelling refers to the process whereby formed polymer particles are 'swelled' by a diluent, giving rise to polymer slurry which is more viscous, which perturbs the reactor flow and may lead to a blockage of the reactor. Control of the co-monomer/monomer ratio according to the invention thus enables to reduce the risk for swelling in the reactor. Alternatively it allows to produce lower density resins without increasing the risk for swelling.

The present invention will be further disclosed in detail hereunder. The description is only given by way of example and does not limit the invention. The reference numbers relate to the hereto-annexed figures.

### Detailed description of the figures

Figure 1 is a schematic representation of a double loop polymerization reactor wherein multiple ethylene feed points are provided on one reactor.
Figure 2 is a detailed representation of a loop reactor having multiple feed points for feeding monomer into the reactor.
Figure 3 is a schematic representation of a double loop polymerization reactor.

### Detailed description of the invention

The present invention is especially applicable to the co-polymerization process of ethylene and an olefin co-monomer in a polymerisation loop reactor. The term "ethylene co-polymerization" includes co-polymerization of ethylene and an olefin co-monomer. Ethylene polymerization comprises feeding to a reactor the reactants including the monomer ethylene, a light hydrocarbon diluent, a catalyst, a co-monomer and optionally a co-catalyst and a terminating agent such as hydrogen. The term "co-polymer" refers to a polymer, which is made by linking two different types of in the same polymer chain.

Olefin co-monomers which are suitable for being used in accordance with the present invention may comprise but are not limited to aliphatic C₃-C₂₀ alpha-olefins. Examples of suitable aliphatic C₃-C₂₀ alpha-olefins include propylene, 1-butene, 4-methyl-1-pentene, 1-hexene, 1-octene, 1-decene, 1-dodecene, 1-tetradecene, 1-hexadecene, 1-octadecene and 1-eicosene. The present invention has in particular been described with reference to the co-polymerization of ethylene with the co-monomer hexene in a loop reactor. However, it should be clear from the present invention that other co-monomers may as well be applied according to the present invention.

Diluents which are suitable for being used in accordance with the present invention may comprise but are not limited to hydrocarbon diluents such as aliphatic, cycloaliphatic and aromatic hydrocarbon solvents, or halogenated versions of such solvents. The preferred solvents are C₁₂ or lower, straight chain or branched chain, saturated hydrocarbons, C₅ to C₉ saturated alicyclic or aromatic hydrocarbons or C₂ to C₆ halogenated hydrocarbons. Nonlimiting illustrative examples of solvents are butane, isobutane, pentane, hexane, heptane, cyclopentane, cyclohexane, cycloheptane, methyl cyclopentane, methyl cyclohexane, isooctane, benzene, toluene, xylene, chloroform, chlorobenzenes, tetrachloroethylene, dichloroethane and trichloroethane. In a preferred embodiment of the present invention, said diluent is isobutane. However, it should be clear from the present invention that other diluents may as well be applied according to the present invention.

The co-polymerization reaction may utilize highly sophisticated catalyst systems that initiate polymerization and propagate the reaction. According to the present invention the term "catalyst," is defined herein as a substance that causes a change in the rate of a co-polymerization reaction without itself being consumed in the reaction. According to an embodiment said catalyst may be a Ziegler-Natta catalyst. Other suitable catalysts may comprise a metallocene catalyst or a chromium catalyst. The term "co-catalyst" as used herein refers to materials that can be used in conjunction with a catalyst in order to improve the activity of the catalyst during the polymerization reaction.

The "Ziegler-Natta catalyst" is preferably of the general formula MXₙ wherein M is a transition metal compound selected from group IV to VII, wherein X is a halogen, and wherein n is the valence of the metal. Preferably, M is a group IV, group V or group VI metal, more preferably titanium, chromium or vanadium and most preferably titanium. Preferably, X is chlorine or bromine, and most preferably, chlorine. Illustrative examples of the transition metal compounds comprise but are not limited to TiCl₃, TiCl₄.

The term "metallocene catalyst" is used herein to describe any transition metal complexes consisting of metal atoms bonded to one or two ligands. In a preferred embodiment, the metallocene catalyst has a general formula MX, wherein M is a transition metal compound selected from group IV and wherein X is a ligand composed of one or two groups of cyclopentadienyl (Cp), indenyl, fluorenyl or their derivatives. Illustrative examples of metallocene catalysts comprise but are not limited to Cp₂ZrCl₂, Cp₂TiCl₂ or Cp₂HfCl₂.

The term "chromium catalysts" refers to catalysts obtained by deposition of chromium oxyde on a support, e.g. a silica or aluminum support. Illustrative examples of chromium catalysts comprise but are not limited to CrSiO₂ or CrAl₂O₃.

It is known in the art that the ratio of co-monomer to monomer (ethylene) differs at different points in the reactor and is difficult to control during the polymerization reaction. In has been shown that just after its injection point in the reactor ethylene is preferentially polymerized. However, the concentration of ethylene changes in favor of co-monomer along the reactor as ethylene is depleted. As a result co-polymer chains are formed that are higher in ethylene concentration in the chain segments grown near the reactor inlet (as defined at the point at which the polymerization reaction commences), and higher in hexene concentration in the chain segments formed near the reactor outlet.

In particular, due to the difference in monomer concentration throughout the reactor, the ratio of hexene to ethylene will vary in the polymerization reactor. A maximal difference in co-monomer/ethylene ratio will generally be observed when comparing the co-monomer/ethylene ratio at the point at which the polymerization reaction commences, i.e. at the reactor inlet of ethylene and co-monomer, with the co-monomer/ethylene ratio at the point downstream the reactor at which the path of the reactor has been completely passed through.

In addition, the longer the reactors, the more important this difference in ratio between the two above-mentioned points will be. According to a preferred embodiment of the present invention, the process comprises reducing the variation in the co-monomer/monomer ratio by providing multiple injection of monomer along the reactor path. Preferably, the variation in ratio will be reduced in order to be lower than 40 %, preferably lower than 30 %, more preferably below 20 % and even more preferably lower than 10 %. It is clear that the reduction in variation may depend on the reactor size.

The following table 1 illustrates the difference in co-monomer/monomer ratio that may occur in a reactor of 60m³ provided with only one injection point. A variation in co-monomer/monomer ratio of more than 30% may be observed.

**Table 1**

| | Loop reactor 60m³ |
|---|---|
| Internal diameter | 0.55m |
| Density of the resin | 0.935 g/cc |
| Length of the reactor | 252m |
| Production | 15 tons/hour |
| Concentration monomer after injection point | 2 % w/v |
| Concentration co-monomer after injection point | 3 % w/v |
| Ratio co-monomer/monomer after injection point | 1.5 |
| Concentration monomer before injection point | 1.43 % w/v |
| Concentration co-monomer before injection point | 2.96 % w/v |
| Ratio co-monomer/monomer before injection point | 2.07 |

Table 2 illustrates co-monomer/monomer ratio in a loop reactor of 60m³ which is provided with three different, spatially separated monomer feeding systems.

**Table 2**

| | Loop reactor 60m³ |
|---|---|
| Internal diameter | 0.55m |
| Density of the resin | 0.938 g/cc |
| Length of the reactor | 252m |
| Production | 15 tons/hour |
| Concentration monomer after first injection point | 2 % w/v |
| Concentration co-monomer after first injection point | 3 % w/v |
| Ratio co-monomer/monomer after first injection point | 1.5 |
| Concentration monomer before second injection point | 1.8 % w/v |
| Concentration co-monomer before second injection point | 2.99 % w/v |
| Ratio co-monomer/monomer before second injection point | 1.65 |
| Concentration monomer after second injection point | 2 % w/v |
| Concentration co-monomer after second injection point | 2.99 % w/v |
| Ratio co-monomer/monomer after second injection point | 1.495 |
| Concentration monomer before third injection point | 1.8 % w/v |
| Concentration co-monomer before third injection point | 2.98 % w/v |
| Ratio co-monomer/monomer before third injection point | 1.65 |
| Concentration monomer after third injection point | 2 % w/v |
| Concentration co-monomer after third injection point | 2.98 % w/v |
| Ratio co-monomer/monomer after third injection point | 1.49 |
| Concentration monomer before first injection point | 1.8 % w/v |
| Concentration co-monomer before first injection point | 2.97 % w/v |
| Ratio co-monomer/monomer before first injection point | 1.65 |

From the tables 1 and 2 it is clear that the use of three monomer injection points allows to reduce the variation in co-monomer/monomer ratio to about 10 %, whereas in reactors having only one injection point variations in co-monomer/monomer ratios of up to 30% may be observed.

The following table 3 illustrates the difference in co-monomer/monomer ratio that may occur in a reactor of 60m³ provided with only one injection point and illustrates the swelling problems that occurs in a reactor provided with only one injection point, upon increasing the reactor temperature from 84 °C to 88 °C.

**Table 3**

| | Loop reactor 60m³ |
|---|---|
| Internal diameter | 0.55m |
| Density of the resin | 0.925 g/cc |
| Length of the reactor | 252m |
| Production | 15 tons/hour |
| Concentration monomer after injection point | 1.3 % w/v |
| Concentration co-monomer after injection point | 3 % w/v |
| Ratio co-monomer/monomer after injection point | 2.31 |
| Concentration monomer before injection point | 0.73 % w/v |
| Concentration co-monomer before injection point | 2.95 % w/v |
| Ratio co-monomer/monomer before injection point | 4.07 |
| Temperature 84 °C | possible to run the production, |
| | productivity = 6340 gPE/gcata |
| temperature 88 °C | swelling and fouling of the reactor |

Table 4 illustrates co-monomer/monomer ratio, and the production productivity at 88°C in a loop reactor of 60m³ which is provided with three different, spatially separated monomer feeding systems.

**Table 4**

| | Loop reactor 60m³ |
|---|---|
| Internal diameter | 0.55m |
| Density of the resin | 0.925 g/cc |
| Length of the reactor | 252m |
| Production | 15 tons/hour |
| Concentration monomer after first injection point | 1.1 % w/v |
| Concentration co-monomer after first injection point | 3 %w/v |
| Ratio co-monomer/monomer after first injection point | 2.72 |
| Concentration monomer before second injection point | 0.91 % w/v |
| Concentration co-monomer before second injection point | 2.99 %w/v |
| Ratio co-monomer/monomer before second injection point | 3.29 |
| Concentration monomer after second injection point | 1.1 % w/v |
| Concentration co-monomer after second injection point | 2.99 %w/v |
| Ratio co-monomer/monomer after second injection point | 2.72 |
| Concentration monomer before third injection point | 0.91 % w/v |
| Concentration co-monomer before third injection point | 2.98 %w/v |
| Ratio co-monomer/monomer before third injection point | 3.28 |
| Concentration monomer after third injection point | 1.1% w/v |
| Concentration co-monomer after third injection point | 2.98 %w/v |
| Ratio co-monomer/monomer after third injection point | 2.71 |
| Concentration monomer before first injection point | 0.91 % w/v |
| Concentration co-monomer before first injection point | 2.97 %w/v |
| Ratio co-monomer/monomer before first injection point | 3.26 |
| Temperature 88 °C | possible to run the production, productivity = 7480 gPE/gcata |

From tables 3 and 4, it is clear that the use of three monomer injection points allows the temperature in the reactor to be increased when compared with the case of single injection wherein swelling is observed at 88°C. In the case of a single injection point the temperature had to be reduced to avoid the swelling phenomena. With three injection points, the temperature can be higher, while producing the polymer with a suitable final density and with a higher productivity.

A major disadvantage of a non-optimal control of the co-monomer/monomer ratio in a polymerization reactor is that co-polymers will be produced having varying and thus non-homogenous properties throughout the reactor, and that the polymerization reaction in the reactor will not be optimal. In addition, due to these varying co-monomer/monomer ratios reaction temperatures will vary throughout the reactor. The polymerization reaction is exothermic. Due to the consumption of ethylene monomer in the loop reactor, the reaction temperature will differ throughout the reactor flow path. In parts of the loops where less ethylene monomer is present, the polymerization rate will be reduced and the reaction temperature will decrease. Fluctuating temperature conditions throughout the reactor are absolutely detrimental with respect to homogeneity of composition of the prepared polymers. Furthermore, as a consequence of these varying ratios in the loop reactor, co-polymers will be produced having varying densities throughout the reactor.

Swelling refers to the process whereby formed polymer particles are 'swelled' by a diluent, giving rise to polymer slurry which is more viscous and which has undesired properties. Temperature and slurry densities must be well controlled in order to avoid the solubility of the lightest polymer fractions in the diluent. Solubility may occur at temperatures and particular polymer slurry densities, which depend on the quantity of co-monomer present in the diluent. For a given polymer density there is a maximum operating temperature. In certain cases, when the operation conditions are not well controlled, the risk for swelling is considerable. As a result of the variation in co-monomer/monomer ratio, varying reaction temperatures and depletion of monomer in the reactor may occur which can induce too low polymer densities, and may lead to swelling. The present invention enables to effectively reduce the risk for this swelling phenomenon by adequately controlling the co-monomer/monomer ratio, the concentration of monomer in the reactor and the reaction temperatures.

The present invention now provides a solution to the above-cited problems by providing additional monomer feed along the path of the reactor. Preferably the co-monomer/monomer ratio is controlled by providing at least two, preferably at least three spatially separated, feeding entries of monomer along the path of the loop reactor.

The application of additional monomer feeds along the path of the reactor has been described in EP 0 891 990. However, this document does not specify where or why these additional monomer feeds are provided on the reactor.

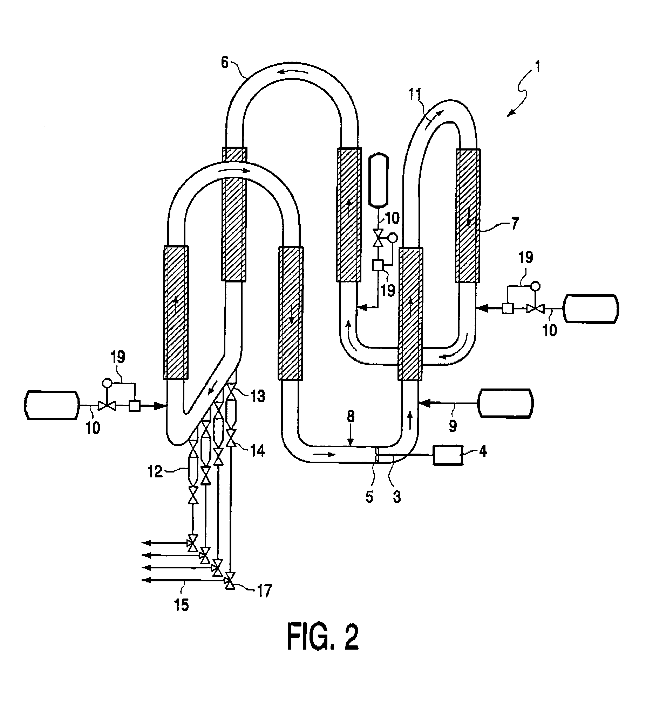

In another preferred embodiment, the invention provides a process for determining suitable positions for multiple, spatially separated, feeding entries of monomer along the path of the loop reactor in order to control the co-monomer/monomer ratio along the path of the reactor. In particular, the feeding entries of additional monomer may be positioned equidistantly along the reactor path in order to keep the co-monomer/monomer ratio substantially constant along the complete path of the reactor. Alternatively, additional monomer feed entries may be provided at non-equidistant positions on the reactor. Particular suitable positioning sites for additional monomer feeding may be chosen in function of reaction parameters, such as reaction temperature, co-monomer/monomer ratio, reactor pump activity, distribution of solids in the reactors, reactant flow in the reactor, etc.. Preferably, the injection feeds are positioned close to bottom elbows of the reactor, as illustrated in Fig. 2.

It is also preferred according to the invention to control the co-monomer/monomer ratio by multiple, spatially separated, feeding of monomer in conjunction with a diluent. Preferably, the monomer/diluent ratio is lower than 5/1, and for instance 3/1. Ethylene is a gas. The reactor is preferably operated as full of liquid. Therefore it is preferred to inject ethylene together with diluent so that part of the ethylene is already dissolved in the diluent. The feed thus either comprises a liquid or a liquid with bubbles of ethylene.

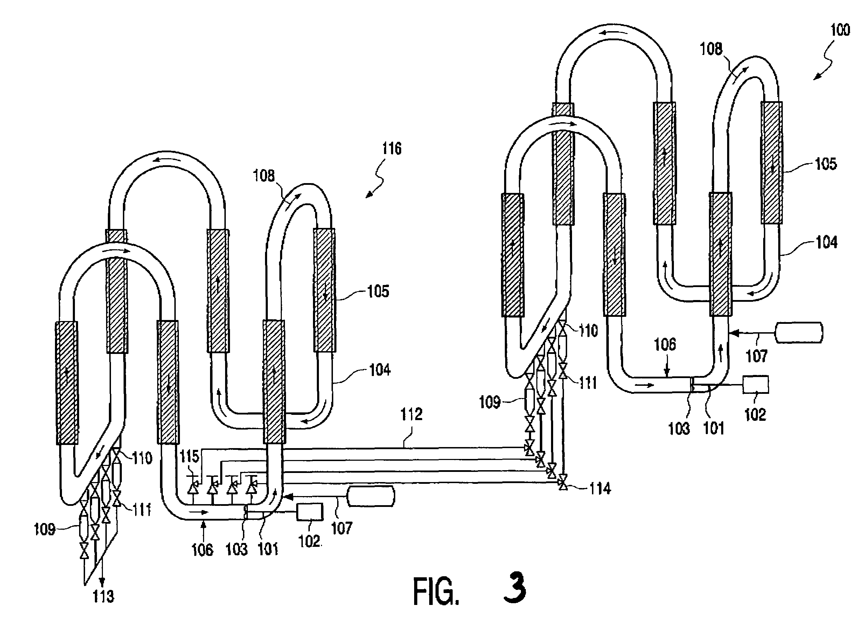

The process according to the present invention is applied in a double loop polymerisation reactor consisting of two liquid full loop reactors, comprising a first and a second reactor connected in series by one or more settling legs of the first reactor connected for discharge of slurry from the first reactor to said second reactor. Such double loop reactor is illustrated on **FIG. 3****.**

**FIG. 3** represents two single loop reactors 100, 116, which are interconnected in series. Both reactors 100, 116 consist of a plurality of interconnected pipes 104. The vertical sections of the pipe segments 104 are preferably provided with heat jackets 105. Reactants are introduced into the reactors 100 by line 107. Catalyst, optionally in conjunction with a co-catalyst or activation agent, may be injected in one or both reactors 100 and 116 by means of conduct 106. The polymerization slurry is directionally circulated throughout the loop reactors 100, 116 as illustrated by the arrows 108 by one or more pumps, such as axial flow pump 101. The pumps may be powered by an electric motor 102. The pumps may be provided with a set of rotating impellers 103. The reactors 100. 116 are further provided with one or more settling legs 109 connected to the pipes 104 of the reactors 100, 116. The settling legs 109 are preferably provided with an isolation valve 110. Further the settling legs can be provided with product take off or discharge valves 111 or can be in direct communication with the downstream section. Downstream the exit of the settling leg 109 of reactor 100, a transfer line 112 is provided which allows to transfer polymer slurry settled in the settling legs 109 to the other reactor 116 through a piston valve 115. Along transfer line 112, a three-way valve 114 may divert the flow to a product recovery zone if the multiple loop reactor has to be used in a parallel configuration. Polymer slurry settled in the settling legs 109 of reactor 116 can be removed by means of one or more product recovery lines 113, e.g. to a product recovery zone.

In series connected reactors are particularly suitable for the preparation of bimodal polyethylene (PE). "Bimodal PE" refers to PE that is manufactured using two reactors, which are connected to each other in series. Polymerization reactors, which are connected in series, may in particular be used to prepare polyolefin polymers having different properties in the different reactors.

In an example, such polymerization double loop reactor, consisting of two interconnected loop reactors, whereby the reaction conditions are different in each of said loop reactors may be used to produce high molecular weight ethylene co-polymers in a first reactor and a low molecular weight ethylene co-polymers in a second reactor. Reactants fed to the first reactor may comprise ethylene, hexene, isobutane diluent, and hydrogen. Concentration of reactants in the first reactor may then for instance comprise 1% w/v ethylene, 3% w/v hexene, and a low concentration of hydrogen. The reaction temperature may comprise around 83 to 88°C and polyethylene co-polymers having a density comprised around 0.925 g/cm³ may be obtained. Polymer slurry may be transferred to the second reactor, wherein further ethylene is fed, preferably to obtain a concentration of 4 % w/v in the reactor and hydrogen is added, preferably to obtain a concentration of 2 vol % in the reactor. Preferably, no additional catalyst is added in the second reactor. Also, preferably no hexene co-monomer is added in the second reactor and co-monomer concentrations in the second reactor result from the transfer of co-monomer together with polymer slurry from the first reactor. Generally residence time of the slurry in the reactor is higher in the first reactor than in the second reactor.

When the hexene/ethylene ratio is not adequately controlled in the first reactor of a double loop system, polymer particles having undesired and non-homogenous properties will be transferred from the first reactor to the second reactor. In addition, due to an inadequate control of the hexene/ethylene ratio in the first reactor, also the transfer of hexene together with polymer slurry from the first reactor to the second reactor, wherein it is used for further co-polymerization is inefficiently controlled. As a result thereof, the polymerization reaction in the second reactor may be sub-optimal and co-polymers having non-homogenous and undesired properties are prepared in the second reactor.

In order to overcome at least some of the above-cited problems associated with co-polymerization in a double loop reactor, the invention further provides a process for improving the co-polymerization of monomer and an olefin co-monomer in a polymerization loop reactor, said reactor being interconnected with a first loop reactor, comprising the steps of:
- sequentially transferring polymer slurry comprising essentially liquid diluent and solid olefin co-polymer particles from the first reactor to the second reactor,
- feeding reactants comprising monomer, diluents and optionally hydrogen, polymerization catalyst and additional co-monomer into the loop reactor,
- further co-polymerizing said reactants in said reactor to produce a polymer slurry comprising essentially liquid diluent and solid olefin co-polymer particles;
- allowing said polymer slurry to settle into two or more settling legs connected to the reactor, and
- sequentially discharging the settled polymer slurry from said two or more settling legs out of the reactor,
   **characterized in that** said process comprises the step of controlling the amount of co-monomer transferred from said first reactor to the reactor.

The process further comprises the step of controlling the amount of co-monomer transferred from said first reactor to the reactor by controlling the co-monomer/monomer ratio along the path in the first reactor.

Controlling correctly the ratio along the path flow allows to improve the productivity of the catalyst and to minimize the concentration of co-monomer in the first reactor. Consequently less co-monomer is transferred to the second reactor.

The amount of co-monomer transferred from said first reactor to the reactor is controlled by controlling the co-monomer/monomer ratio and thus by multiple, spatially separated, feeding of monomer along the path of the first reactor. Preferably, the amount of co-monomer transferred from said first reactor to the reactor is controlled by controlling the co-monomer/monomer ratio and thus by providing at least two, preferably at least three spatially separated, feeding entries of monomer along the path of the loop reactor. The multiple injection allows to optimize the working conditions of the first reactor and the consequence is that less co-monomer is transferred to the second reactor

The co-monomer/monomer ratio along the path in the first reactor can be further controlled by multiple, spatially separated, feeding of monomer in conjunction with a diluent in said first reactor and by separately controlling the flow rate of each spatially separated monomer feed along the path of the first reactor.

The present process is particularly relevant in polymerization processes wherein low concentrations of monomer, preferably ethylene, are obtained in the polymerization reactor, and wherein concentrations of monomer are obtained in the polymerization reactor which are preferably below 4% w/v, or below 3% w/v, or below 2% w/v or below 1 % w/v.

The present process can also advantageously be applied in polymerization processes, carried out in a double loop reactor, wherein low concentrations of monomer, preferably ethylene, are obtained in the first loop reactor, and more in particular wherein concentrations of monomer are obtained in the first loop reactor which are preferably below 4% w/v, or below 3% w/v, or below 2% w/v or below 1% w/v.

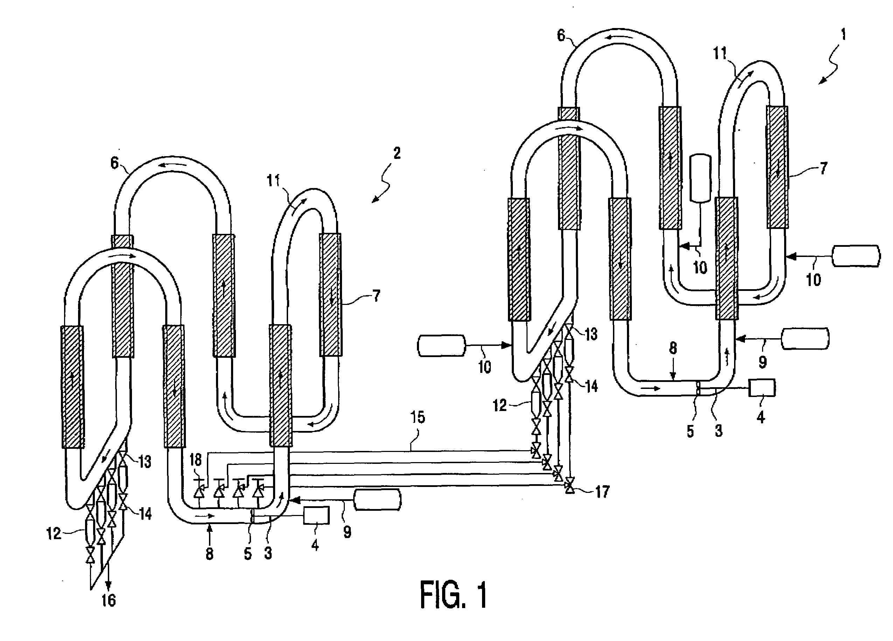

In another embodiment, the invention relates to a polymerization loop reactor suitable for the co-polymerization process of ethylene and an olefin co-monomer, preferably hexene. Such a reactor comprises a double loop reactor. Referring now to **FIG. 1****,** a double loop polymerisation reactor according to the invention is illustrated which is in particular **characterized in that** said reactor comprises multiple additional means for feeding monomer, which are positioned spatially separated along the path of the loop reactor. In particular, the present reactor comprises at least two, preferably at least three additional means for feeding monomer, which are positioned spatially separated along the path of the loop reactor.

A first reactor 1 comprises a plurality of interconnected pipes 6 defining a flow path 8 for polymer slurry, said slurry consisting essentially of ethylene, hexene, a polymerization catalyst, liquid diluent, preferably isobutane, and solid olefin polymer particles. Each loop reactor 1, 2 consists of a plurality of interconnected pipes 6, such as a plurality of vertical pipe segments, a plurality of upper lateral pipe segments, a plurality of lower lateral pipe segments, wherein each of said vertical pipe segments is connected at an upper end thereof to one of said upper lateral pipe segments and is connected at a lower end thereof to one of said lower lateral pipe segments through elbow shaped connecting segments, thus, defining a continuous flow path 11 for a polymer slurry. It will be understood that while the loop reactor 1 and 2 are illustrated with four vertical pipes, said loop reactors 1,2 may be equipped with less or more pipes, such as 4 or more pipes, for example between 4 and 20 vertical pipes. The vertical sections of the pipe segments are preferably provided with heat jackets 7. Polymerization heat can be extracted by means of cooling water circulating in these jackets of the reactor. Said reactors preferably operate in a liquid full mode.

The reactants including ethylene, isobutane, hexene and optionally hydrogen are introduced into the reactor 2 by means 9. At least one reactor 1 is also fed with catalyst, optionally in conjunction with a co-catalyst or activation agent, by means of the conduct 8. In a preferred embodiment, catalysts are introduced upstream from the circulation pump 3 via line 8, while diluent, monomer, co-monomers and reaction additives are preferably introduced downstream of the circulation pump 3 via line 9.

The first reactor 1 further comprises at least one means 10 for additionally feeding ethylene in said reactor. In **FIG.1** three additional ethylene feeding means 10 are illustrated.

In addition, the reactor according to the invention further comprises flow controlling means. The flow controlling means can be multiple and spatially separated, or they can be centralized and close to each other in space. In an embodiment, there can be one control per inlet or feeding means. In another embodiment, the control can be spatially separated from the inlet.

In an embodiment of the present invention, the number of flow controlling means corresponds to the number of additional means for feeding monomer, which are positioned spatially separated along the path of the loop reactor. Referring to **FIG. 2** there is further illustrated that each means 10 for separately feeding additional ethylene to the reactor is provided with a flow controlling means 19.

The polymerization slurry is maintained in circulation in the loop reactors. As illustrated in **FIG. 1**. The polymerization slurry is directionally circulated throughout the loop reactor 1, 2 as illustrated by the arrows 11 by one or more pumps, such as axial flow pumps 3. The pump may be powered by an electric motor 4. As used herein the term "pump" includes any device from compressing driving, raising the pressure of a fluid, by means for example of a piston or set of rotating impellers 5. According to the present invention, the pump is preferably of axial type.

Each loop reactor 1, 2 is further provided with one or more settling legs 12 connected to the pipes 6 of the reactor 1, 2. Intermediate polymer slurry or polymer product may be removed from the loop reactors, by continuous or periodical discharge through one or more settling legs 12 along with some diluent. In the settling legs 12, the solid content is increased with respect to its concentration in the body of the loop reactor. As illustrated in **FIG. 1****,** polymer slurry settled in the settling legs 12 of reactor 1 may be removed by means of a three-way valve 17 to another reactor 2, to which it is transferred by means of one or more transfer lines 15, while polymer slurry settled in the settling legs 12 of reactor 2 may be removed to a product recovery zone, for instance by means of conduit 16. As used herein "product recovery zone" includes but is not limited to heated or not heated flash lines, flash tank, cyclones, filters and the associated vapor recovery and solids recovery systems or transfer lines to a following reactor and said following reactor when several reactors are connected in series.

The settling legs can be located on any segment or any elbow of said loop reactor. In said settling legs the polymerization slurry decants so that the slurry exiting the reactor is more concentrated in solid than the circulating slurry. This permits to limit the quantity of diluent that has to be treated and re-fed to the reactor. It will be understood that the discharge of said settling legs may be operated in a continuous or discontinuous mode, but preferably in a continuous mode.

The settling legs 12 are preferably provided with an isolation valve 13. These valves 13 may for example be ball valves. Under normal conditions these valves are open. These valves can be closed for example to isolate a settling leg from operation. Said valves 13 can be closed when the reactor pressure falls below a chosen value.

Further the settling legs can be provided with product take off or discharge valves 14. Discharging is performed in such a way that the volume discharged from a settling leg substantially corresponds to the volume of polymer slurry settled in said settling leg since its previous discharge. The discharge valve 14 may be any type of valve, which can permit continuous or periodical discharge of polymer slurry, when it is fully open. The type and structure of the discharge valve can be selected by those skilled in the art as required. According an embodiment of the present invention the totality of settled slurry is discharged at each opening of the discharge valve. When a plurality of legs are employed, the discharge of the settled polymer slurry may be discharged in sequence on a rotating basis for more uniform discharging to a subsequent reactor or to a product recovery zone.

Downstream the valve 14, at the exit of the settling leg 12, a three-way valve 17 is provided which allows to transfer polymer slurry settled in the settling legs, for instance to another reactor by means of the transfer line 15. The transfer line 15 connects the three-way valve 17, provided at the exit of the settling leg 12 of one reactor 1, with the entry in the other reactor 2, where a piston valve 18 is provided.

For reasons of brevity and clarity, conventional auxiliary equipment such as pumps, additional valves, and other process equipment have not been included in this description and the accompanying drawings as they play no part in the explanation of the invention, also additional measurement and control devices which would typically be used on a polymerization process have not been illustrated.

In a preferred embodiment, it is to be understood that all lines or conduits applied in accordance with the present invention for feeding reactants may be provided, where necessary with flow measuring means.

It should be clear from the present description that concentrations of the different reactants in the co-polymerization reaction relate to the size of the polymerization reactors and the characteristics of the co-polymer end products and can be changed if desired, e.g. in function of the reactor sizes.

## Claims

1. Process for the co-polymerization of ethylene monomer and an olefin co-monomer in a polymerization loop reactor comprising the steps of
- feeding monomer, an olefin co-monomer, diluents and optionally hydrogen into the loop reactor,
- feeding at least one polymerization catalyst into the reactor,
- co-polymerizing said monomer and said co-monomer to produce a polymer slurry comprising essentially liquid diluent and solid olefin co-polymer particles,
- allowing said polymer slurry to settle into one or more settling legs connected to the reactor, and
- sequentially discharging the settled polymer scurry from said one or more settling legs out of the reactor,
**characterized in that** said process further comprises the step of controlling the co-monomer/monomer ratio along the path of the reactor by multiple, spatially separated, feeding of monomer along the path of the loop reactor and wherein the process is applied to the first loop of a double loop reactor.

2. Process according to claim 1, comprising reducing the variation in the co-monomer/monomer ratio to a variation which is lower than 30 %, more preferably below 20 % and even more preferably lower than 10 % by controlling the co-monomer/monomer ratio by providing at least two, preferably at least three spatially separated, feeding entries of monomer along the path of the loop reactor.

3. Process according to claim 1 or 2, further comprising determining suitable positions for multiple, spatially separated, feeding entries of monomer along the path of the loop reactor in order to control the co-monomer/monomer ratio along the path of the reactor.

4. Process according to any of claims 1 to 3, comprising the step of controlling the co-monomer/monomer ratio by multiple, spatially separated, feeding of monomer in conjunction with a diluent.

5. Process according to claim 4, whereby said monomer/diluent ratio is lower than 5/1.

6. Process according to any of claims 1 to 5, comprising separately controlling the flow rate of each, spatially separated, monomer feed along the path of the loop reactor.

7. Process according to any of claims 1 to 6, wherein said co-monomer is 1-hexene.

8. Polymerization loop reactor suitable for the co-polymerization process of a monomer, preferably ethylene and an olefin co-monomer, preferably hexene, comprising:
- a plurality of interconnected pipes defining a flow path for a polymer slurry, said slurry consisting essentially of ethylene, a co-monomer, a polymerization catalyst, liquid diluent and solid olefin co-polymer particles,
- means for feeding monomer, a co-monomer, diluent and optionally hydrogen in the reactor,
- means for feeding a polymerization catalyst in the reactor,
- a pump suitable for maintaining the polymer slurry in circulation in said reactor,
- one or more settling legs connected to the pipes of said reactor for settling of polymer slurry, and
- one or more lines for discharging settled polymer slurry out of the reactor **characterized in that** said reactor comprises multiple means for feeding monomer, which are positioned spatially separated along the path of the loop reactor, whereby said reactor corresponds to the first reactor of a double loop polymerization reactor, said first reactor being interconnected with the second loop reactor of said double loop polymerization reactor.

9. Polymerization reactor according to claim 8, **characterized in that** said reactor comprises multiple, spatially separated additional means for the feeding of monomer in conjunction with a diluent into said first reactor.

10. Polymerization reactor according to claim 8 or 9, **characterized in that** said reactor comprises at least two, preferably at least three additional means for feeding monomer, which are positioned spatially separated along the path of the loop reactor.

11. Polymerization reactor according to claim 10 comprising a number of flow controlling means, whereby the number of flow controlling means corresponds to the number of additional means for feeding monomer, which are positioned spatially separated along the path of the loop reactor.

12. Polymerization reactor according to claim 10 comprising a number of flow controlling means, whereby the number of flow controlling means corresponds to the number of additional means for feeding monomer, which are centralized.

## Patentansprüche

1. Verfahren zur Copolymerisation von Ethylen-Monomer und eines Olefin-Comonomers in einem Polymerisations-Schlaufenreaktor, wobei das Verfahren die folgenden Schritte umfasst;
- Zuführen von Monomer, eines Olefin-Comonomers, von Verdünnungsmitteln und gegebenenfalls von Wasserstoff in den Schlaufenreaktor,
- Zuführen von zumindest einem Polymerisationskatalysator in den Reaktor,
- Copolymerisieren des Monomers und des Comonomers, um eine Polymer-Aufschlämmung herzustellen, die im Wesentlichen flüssige Verdünnungsmittel- und feste Olefin-Copolymer-Partikel umfasst,
- Absetzenlassen der Polymer-Aufschlämmung in einen oder mehrere Absetzstränge, die mit dem Reaktor verbunden sind, und
- sequentielles Ableiten der abgesetzten Polymer-Aufschlämmung aus einem oder mehreren Absetzsträngen aus dem Reaktor,
**dadurch gekennzeichnet, dass** das Verfahren weiters den Schritt des Kontrollieren des Verhältnisses von Comonomer zu Monomer entlang des Weges des Reaktors durch mehrfaches, räumlich getrenntes Zuführen von Monomer entlang des Weges des Schlaufenreaktors, und wobei das Verfahren auf die erste Schlaufe eines Doppelschlaufenreaktors angewandt wird.

2. Verfahren nach Anspruch 1, umfassend das Verringern der Variation im Verhältnis von Comonomer zu Monomer auf eine Variation, die unter 30 %, mehr bevorzugt unter 20 % und noch mehr bevorzugt unter 10 %, liegt, indem das Verhältnis von Comonomer zu Monomer durch Vorsehen von zumindest zwei, vorzugsweise zumindest drei, räumlich getrennten Monomer-Zuführöffnungen entlang des Weges des Schlaufenreaktors kontrolliert wird.

3. Verfahren nach Anspruch 1 oder 2, weiters umfassend das Bestimmen von geeigneten Positionen für mehrfache, räumlich getrennte Monomer-Zuführöffnungen entlang des Weges des Schlaufenreaktors, um das Verhältnis von Comonomer zu Monomer entlang des Weges des Reaktors zu kontrollieren.

4. Verfahren nach einem der Ansprüche 1 bis 3, umfassend den Schritt des Kontrollieren des Verhältnisses von Comonomer zu Monomer durch mehrfaches, räumlich getrenntes Zuführen von Monomer in Verbindung mit einem Verdünnungsmittel.

5. Verfahren nach Anspruch 4, wobei das Verhältnis von Monomer zu Verdünnungsmittel unter 5:1 liegt.

6. Verfahren nach einem der Ansprüche 1 bis 5, weiters umfassend das separate Kontrollierten der Durchflussrate von jeder räumlich getrennten Monomerzuführ entlang des Weges des Schlaufenreaktors.

7. Verfahren nach einem der Ansprüche 1 bis 6, wobei es sich beim Comonomer um 1-Hexen handelt.

8. Polymerisations-Schlaufenreaktor, der für das Copolymerisationsverfahren eines Monomers, vorzugsweise Ethylen, und eines Olefin-Comonomers, vorzugsweise Hexen, geeignet ist, wobei der Reaktor enthält:
- eine Mehrzahl von miteinander verbundenen Rohren, die einen Strömungsweg für eine Polymer-Aufschlämmung definieren, wobei die Aufschlämmung im Wesentlichen aus Ethylen, einem Comonomer, einem Polymerisationskatalysator, flüssigen Verdünnungsmittel- und festen Olefin-Copolymer-Partikeln besteht,
- Mittel zum Zuführen von Monomer, eines Comonomers, von Verdünnungsmittel und gegebenenfalls von Wasserstoff in den Reaktor,
- Mittel zum Zuführen eines Polymerisationskatalysators in den Reaktor,
- eine Pumpe, die geeignet ist, um die Polymer-Aufschlämmung im Reaktor in Umlauf zu halten,
- einen oder mehrere Absetzstränge, die mit den Rohren des Reaktors verbunden und zum Absetzen der Polymer-Aufschlämmung vorgesehen sind, und
- eine oder mehrere Leitungen zum Ableiten der abgesetzten Polymer-Aufschlämmung aus dem Reaktor,
**dadurch gekennzeichnet, dass** der Reaktor mehrfache Mittel zur Zufuhr von Monomer enthält, die entlang des Weges des Schlaufenreaktors räumlich getrennt angeordnet sind, wobei der Reaktor dem ersten Reaktor eines Polymenrisations-Doppelschlaufenreaktors entspricht, wobei der erste Reaktor mit dem zweiten Schlaufenreaktor des Polymerisations-Doppelschlaufenreaktors verbunden ist.

9. Polymerisationsreaktor nach Anspruch 8, **dadurch gekennzeichnet, dass** der Reaktor mehrfache, räumlich getrennte, zusätzliche Mittel zur Zufuhr von Monomer in Verbindung mit einem Verdünnungsmittel in den ersten Reaktor aufweist.

10. Polymerisationsreaktor nach Anspruch 8 oder 9, **dadurch gekennzeichnet, dass** der Reaktor zumindest, vorzugsweise zumindest drei, zusätzliche Mittel zur Zufuhr von Monomer enthält, die entlang des Weges des Schlaufenreaktors räumlich getrennt angeordnet sind.

11. Polymerisationsreaktor nach Anspruch 10, umfassend eine Reihe von Flusssteuermitteln, wobei die Anzahl von Flusssteuermitteln der Anzahl von zusätzlichen Mitteln zur Zufuhr von Monomer entspricht, die entlang des Weges des Schlaufreaktors räumlich getrennt angeordnet sind.

12. Polymerisationsreaktor nach Anspruch 10, umfassend eine Reihe von Flusssteuermitteln, wobei die Anzahl von Flusssteuermitteln der Anzahl von zusätzlichen Mitteln zur Zufuhr entspricht, die zentral angeordnet sind.

## Revendications

1. Procédé pour la copolymérisation d'un monomère d'éthylène et d'un comonomère d'oléfine dans un réacteur de polymérisation à boucle comprenant les étapes consistant à :
- charger un monomère, un comonomère d'oléfine, des diluants et facultativement de l'hydrogène dans le réacteur à boucle,
- charger au moins un catalyseur de polymérisation dans le réacteur,
- copolymériser ledit monomère et ledit comonomère pour produire une suspension épaisse de polymère comprenant essentiellement un diluant liquide et des particules de copolymère d'oléfine solides,
- laisser ladite suspension épaisse de polymère décanter dans une ou plusieurs colonnes de décantation raccordées au réacteur, et
- évacuer séquentiellement la suspension épaisse de polymère décantée de ladite ou lesdites colonnes de décantation hors du réacteur,
**caractérisé en ce que** ledit procédé comprend en outre l'étape consistant à réguler le rapport comonomère/monomère tout au long du trajet du réacteur par chargement multiple et spatialement séparé du monomère tout au long du trajet du réacteur à boucle et dans lequel le procédé est appliqué à la première boucle d'un réacteur à deux boucles.

2. Procédé selon la revendication 1, comprenant la réduction de la variation du rapport comonomère/monomère à une variation qui est inférieure à 30 %, de manière davantage préférée inférieure à 20 % et de manière encore plus préférée inférieure à 10 % en régulant le rapport comonomère/monomère en fournissant au moins deux, de préférence au moins trois entrées de chargement spatialement séparé du monomère tout au long du trajet du réacteur à boucle.

3. Procédé selon la revendication 1 ou 2, comprenant en outre la détermination de positions appropriées pour les entrées de chargement multiple et spatialement séparé de monomère tout au long du trajet de réacteur à boucle afin de réguler le rapport comonomère/monomère tout au long du trajet du réacteur.

4. Procédé selon l'une quelconque des revendications 1 à 3, comprenant l'étape consistant à réguler le rapport comonomère/monomère par chargement multiple et spatialement séparé de monomère conjointement à un diluant.

5. Procédé selon la revendication 4, par lequel ledit rapport monomère/diluant est inférieur à 5/1.

6. Procédé selon l'une quelconque des revendications 1 à 5, comprenant la régulation séparée du débit de chaque chargement de monomère spatialement séparé tout au long du trajet du réacteur à boucle.

7. Procédé selon l'une quelconque des revendications 1 à 6, dans lequel ledit comonomère est le 1-hexène.

8. Réacteur de polymérisation à boucle approprié pour le procédé de copolymérisation d'un monomère, de préférence l'éthylène et d'un comonomère d'oléfine, de préférence l'hexène, comprenant :
- une pluralité de tuyaux raccordés entre eux définissant un trajet d'écoulement pour une suspension épaisse de polymère, ladite suspension épaisse étant essentiellement constituée d'éthylène, d'un comonomère, d'un catalyseur de polymérisation, d'un diluant liquide et de particules de copolymère d'oléfine solides,
- un moyen pour charger le monomère, un comonomère, un diluant et facultativement de l'hydrogène dans le réacteur,
- un moyen pour charger un catalyseur de polymérisation dans le réacteur,
- une pompe appropriée pour maintenir la suspension épaisse de polymère en circulation dans ledit réacteur,
- une ou plusieurs colonnes de décantation raccordées aux tuyaux dudit réacteur pour la décantation de la suspension épaisse de polymère, et
- une ou plusieurs conduites d'évacuation de suspension épaisse de polymère décantée hors du réacteur, **caractérisé en ce que** ledit réacteur comprend de multiples moyens pour charger le monomère, qui sont positionnés de façon spatialement séparés tout au long du trajet du réacteur à boucle, moyennant quoi ledit réacteur correspond au premier réacteur d'un réacteur de polymérisation à deux boucles, ledit premier réacteur étant interraccordé avec le second réacteur à boucle dudit réacteur de polymérisation à deux boucles.

9. Réacteur de polymérisation selon la revendication 8, **caractérisé en ce que** ledit réacteur comprend des moyens additionnels multiples et spatialement séparés pour le chargement du monomère conjointement à un diluant dans ledit premier réacteur.

10. Réacteur de polymérisation selon la revendication 8 ou 9, **caractérisé en ce que** ledit réacteur comprend au moins deux, de préférence au moins trois moyens additionnels pour charger le monomère, qui sont positionnés de façon spatialement séparée tout au long du trajet du réacteur à boucle.

11. Réacteur de polymérisation selon la revendication 10, comprenant un certain nombre de moyens de régulation d'écoulement, moyennant quoi le nombre de moyens de régulation d'écoulement correspond au nombre de moyens additionnels pour charger le monomère, qui sont positionnés de façon spatialement séparée tout au long du trajet du réacteur à boucle.

12. Réacteur de polymérisation selon la revendication 10, comprenant un certain nombre de moyens de régulation d'écoulement, moyennant quoi le nombre de moyens de régulation d'écoulement correspond au nombre de moyens additionnels pour charger le monomère, qui sont centralisés.
